# EUROPEAN PATENT SPECIFICATION

(11) **EP 3 536 584 B1**
(45) Date of publication and mention of the grant of the patent: **21.07.2021**
(21) Application number: 19161416.3
(22) Date of filing: 07.03.2019
(51) Int. Cl.: B62D 24/00, B62D 33/077, B62D 63/02

(54) **MODULAR VEHICLE**
MODULARES FAHRZEUG
VÉHICULE MODULAIRE

(30) Priority: 07.03.2018 IT 201800003333
(43) Date of publication of application: 11.09.2019
(73) Proprietor: IVECO FRANCE S.A.S., 69200 Vénissieux (FR)
(72) Inventor: CODRON, Stephane, 69008 LYON (FR)
(74) Representative: Faraldi, Marco

(56) References cited:
- CN-A- 106 828 517
- DE-A1-102016 011 656
- DE-A1-102016 209 099

## Description

### TECHNICAL FIELD

The present invention relates to a modular vehicle, in particular an automated driving modular electric vehicle.

### STATE OF THE PRIOR ART

In the field of transport, there is an increasing demand for a transport system which is interoperable, economical, ergonomic and environmentally sustainable.

For example, Toyota has developed a transportation system called "E-Palette" comprising a plurality of automatically driven vehicles. Each vehicle is an essentially parallelepiped-shaped body with four pairs of electrically powered wheels. Electrical energy is provided by batteries.

The interior of the vehicles may be customised according to the purpose of the vehicle; for example, it may be equipped for passenger transport or for the sale of goods or for catering.

The purpose of the system is to provide travellers with the opportunity to perform several activities during their trip (buying, eating etc.).

However, it is necessary to reconfigure the vehicle each time according to the condition of use. This point is critical because the conditions of use, such as the level of trim, finishes or layout of the vehicle's interior, differ greatly depending on whether the purpose of the vehicle is, for example, passenger transport or the sale of goods or catering. In addition, frequent reconfiguring of the vehicle's interior at each use will lead to wear damage which may lead to restrictions on uses such as passenger transport.

Other examples of automated driving transport systems are disclosed in documents CN106828517 A, DE102016209099 A1 or DE102016011656 A1.

Automated driving transport systems therefore still need to be improved in order to make them as versatile and modular as possible.

The invention is intended to resolve the above-mentioned problems.

### SUMMARY OF THE INVENTION

The above-mentioned objects are achieved by a modular vehicle according to the appended Claims.

### BRIEF DESCRIPTION OF THE DRAWINGS

Other characteristics and benefits of the invention will become apparent from the following non-limiting description, provided for illustrative purposes, with reference to the attached drawings wherein:
- Figure 1 is a perspective view of a modular vehicle according to the invention in a first operating condition;
- Figure 2 is an exploded perspective view of the vehicle of Figure 1;
- Figure 3 is a perspective view of the vehicle of Figure 1 in a second operating condition; and
- Figures 4 - 7 are schematic lateral views of the vehicle of Figure 1 under various operating conditions.

### DETAILED DESCRIPTION OF THE INVENTION

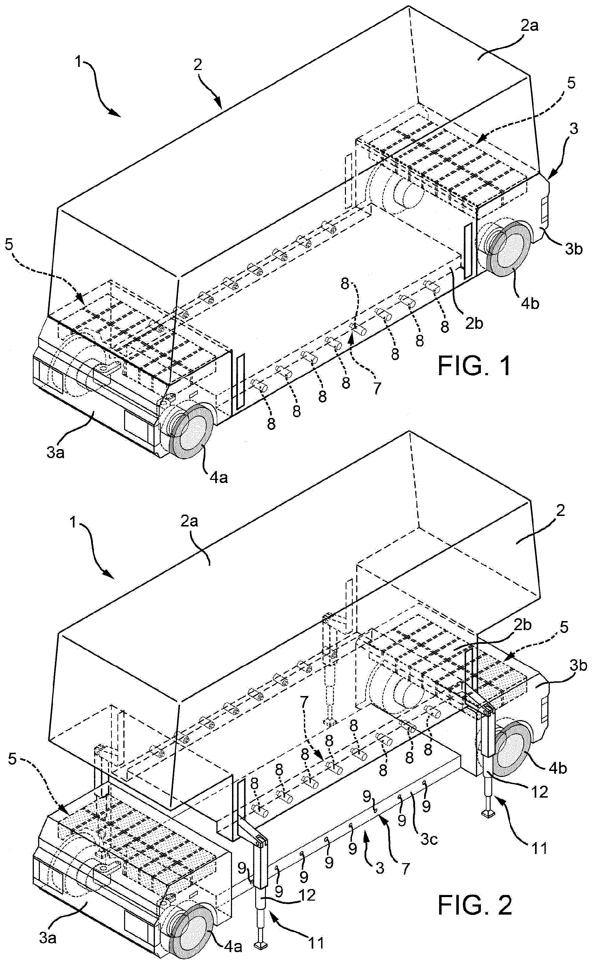

Figure 1 shows a modular vehicle 1 essentially comprising a cabin 2 and a wheeled chassis 3.

The vehicle 1 has a substantially parallelepiped shape and consists of a pair of front wheels 4a and a pair of rear wheels 4b. Advantageously, the wheels 4a and 4b are motorised wheels, preferably electrically motorised via batteries 5 housed in the chassis 3. Advantageously, the batteries 5 are grouped in a front portion 3a and in a rear portion 3b of the chassis which are higher than a central portion 3c of the latter. The front and rear portions 3a, 3b are equipped with all the components which allow the chassis 3 to run on the road (signalling lights etc.).

According to the present invention, the cabin 2 is coupled to the chassis 3 by a shaped coupling and is selectively detachable from the chassis 3.

In more detail, the cabin 2 comprises an upper portion 2a of a substantially free shape and a lower portion 2b configured to mechanically couple with the shape defined by the front, rear and central portions 3a, 3b and 3c of the chassis 3. The cabin 2 further comprises energy coupling means (not shown) configured to connect the batteries 5 and/or other thermal/hydraulic systems housed in the chassis 3 and in the cabin 2.

The vehicle 1 may comprise connection means 7 configured to attach the cabin 2 to the chassis 3 if necessary. For example, the connection means 7 may comprise at least four rods 8 (two per side of the cabin 2) configured to fit into respective holes 9 made in the central portion 3c of the chassis 3. In the example shown, the vehicle 1 comprises a plurality of rods 8 positioned on the sides of the cabin 2 for a respective number of holes 9 located in the sides of the central portion 3c of the chassis 3.

The vehicle 1 may also comprise lifting means 11 configured to lift the cabin 2 relative to the chassis 3 to allow substitution of a cabin and/or a chassis 3 with another.

Preferably, the lifting means may comprise mechanical arms 12 configured to be concealed inside the cabin 2 in an operating condition of the vehicle 1 and configured to rest on the ground in order to lift the cabin 2 relative to the chassis when activated, for example via a hydraulic jack.

The vehicle 1 comprises communication means (not shown) configured to allow control of the vehicle 1 by an electronic unit (not shown). These communication means may be physical means, such as cables, or electromagnetic means, such as radio or Wi-Fi signals. The electronic unit may be borne by the vehicle 1 or housed in a central operating unit and thus outside the vehicle. The electronic unit is also configured to control the connection means 7 and the lifting means 11, if present.

Operation of the modular vehicle 1 according to the invention is as follows.

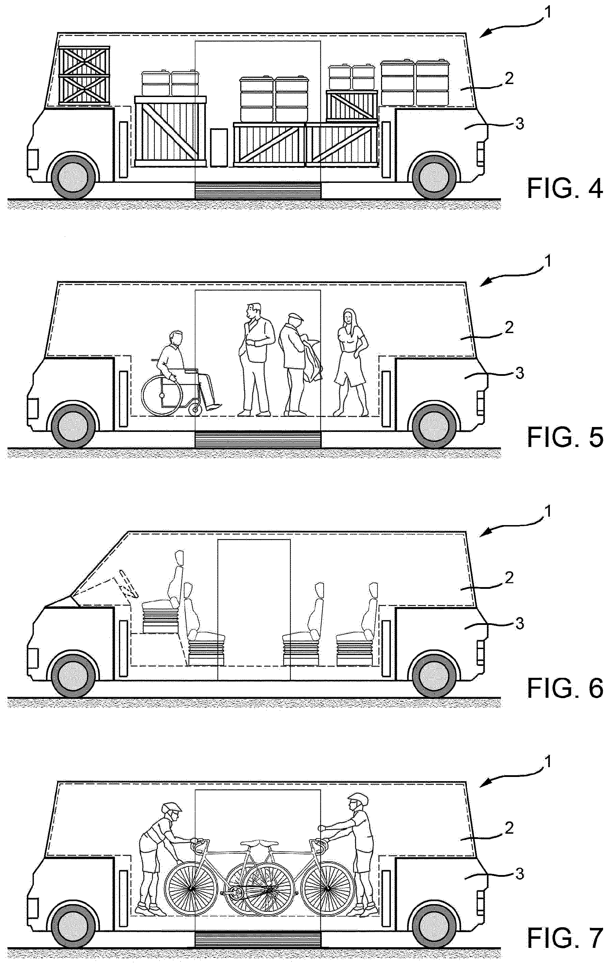

The transport system comprising the vehicles 1 may comprise a plurality of chassis 3, identical to each other, and a plurality of cabins 2 each dedicated to its specific use. For example, the cabins 2 could be designed for the transport of goods (Figure 4) or the cabins 2 could be designed as stores, for example a library (Figure 5) or the cabins 2 could be designed for transporting passengers (Figures 6 and 7).

In an operating phase of the vehicle 1 (Figure 1), the cabin 2 is connected to the chassis 3 which is automatically driven by the electronic unit. In this phase, the possible presence of the connection means 7 helps with coupling of the cabin 2 to the chassis 3.

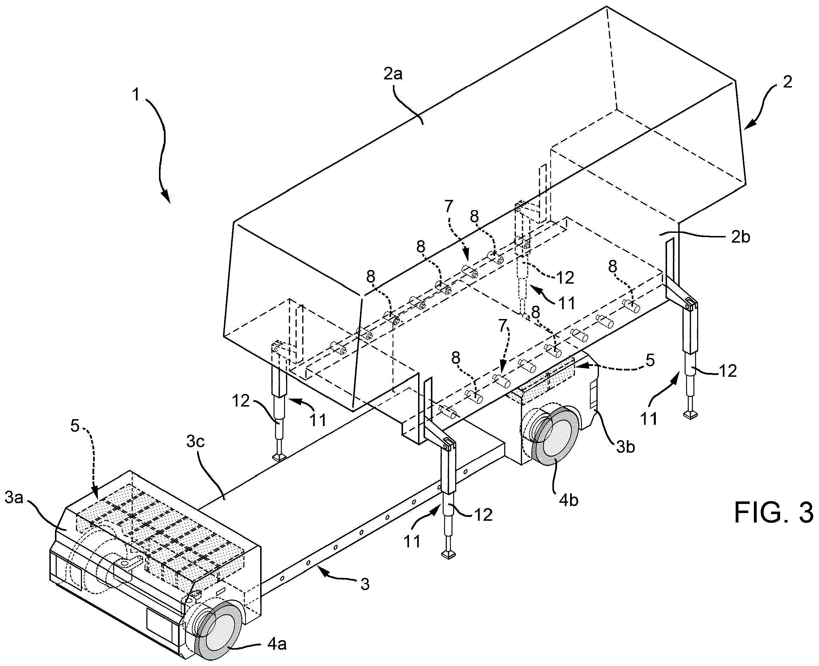

In a substitution phase of the cabin 2 (Figures 2 and 3), the latter is detached from the chassis 3 and a new cabin 2 is substituted for the previous one. In this phase, the possible presence of lifting means 11 helps with substitution of the cabin 2.

From the above, the benefits of a modular vehicle 1 according to the present invention are very clear.

The vehicle 1 is completely modular and each cabin 2 may be designed for a specific use while the chassis remains identical. Passenger comfort is ensured and the availability of cabins 2 of different types makes it possible to address all markets (transport of goods, passengers, personal services, etc.).

Thanks to the shaped coupling, substitution of one cabin 2 for another is simple and may be done automatically.

Finally, it is clear that the modular vehicle 1 according to the present invention may be subject to modifications and variations without thereby departing from the protective scope defined by the Claims.

For example, the connection means 7 or the lifting means 11 could be achieved in a different way or be absent.

The wheels 4 could be hydraulically powered wheels and the batteries 5 could be replaced by a hydraulic control circuit.

The shape of the chassis 3 and the cabin 2 may vary according to the requirements and typology of the vehicles.

## Claims

1. An automated driving vehicle (1) comprising a wheeled chassis (3) and a cabin (2) borne by the chassis (3), wherein the cabin (2) can be separated from the chassis (3), **characterized in that** said vehicle comprises lifting means (11) configured to lift the cabin (2) from said chassis (3).

2. The vehicle according to Claim 1, wherein the chassis (3) is coupled to the cabin (2) through a shaped coupling.

3. The vehicle according to Claim 1 or 2, wherein said chassis moves by means of motorised wheels.

4. The vehicle according to Claim 3, wherein said wheels are electrically motorised.

5. The vehicle according to one of the previous Claims, wherein said vehicle comprises an electronic unit configured to automatically drive said chassis.

6. The vehicle according to one of the previous Claims, wherein said vehicle comprises connection means (7) configured to selectively couple the cabin (2) to the chassis (3) .

7. The vehicle according to Claim 6, wherein said connection means (7) comprise elements (8) borne by either the cabin (2) or the chassis (3) configured to be inserted into respective holes (9) made in either the cabin (2) or the chassis (3), whichever does not carry the elements.

8. The vehicle according to any of the preceding claims, wherein said lifting means (11) are mechanical arms (12).

9. The vehicle according to one of the previous claims, wherein said vehicle comprises communication means configured to allow communication with an electronic unit configured to control said vehicle (1).

## Patentansprüche

1. Automatisch fahrendes Fahrzeug (1), umfassend ein mit Rädern versehenes Fahrgestell (3) und eine Kabine (2), die von dem Fahrgestell (3) getragen wird, wobei die Kabine (2) von dem Fahrgestell (3) getrennt werden kann, **dadurch gekennzeichnet, dass** das Fahrzeug Hubmittel (11) umfasst, ausgebildet, um die Kabine (2) von dem Fahrgestell (3) anzuheben.

2. Fahrzeug gemäß Anspruch 1, bei welchem das Fahrgestell (3) mit der Kabine (2) durch eine geformte Kupplung gekoppelt ist.

3. Fahrzeug gemäß Anspruch 1 oder 2, bei welchem das Fahrgestell sich mittels motorisierter Räder bewegt.

4. Fahrzeug gemäß Anspruch 3, bei welchem die Räder elektrisch motorisiert sind.

5. Fahrzeug gemäß einem der vorhergehenden Ansprüche, welches Fahrzeug eine elektronische Einheit umfasst, ausgebildet, um das Fahrgestell automatisch zu fahren.

6. Fahrzeug gemäß einem der vorhergehenden Ansprüche, welches Fahrzeug Verbindungsmittel (7) umfasst, ausgebildet, um die Kabine (2) selektiv mit dem Fahrgestell (3) zu koppeln.

7. Fahrzeug gemäß Anspruch 6, bei welchem die Verbindungsmittel (7) Elemente (8) umfassen, die entweder an der Kabine (2) oder dem Fahrgestell (3) angebracht sind, ausgebildet, um in entsprechende Löcher (9) eingesetzt zu werden, die entweder in der Kabine (2) oder dem Fahrgestell (3) vorgesehen sind, und zwar in demjenigen von beiden, das nicht mit den Elementen versehen ist.

8. Fahrzeug gemäß einem der vorhergehenden Ansprüche, bei welchem die Hubmittel (11) mechanische Arme (12) sind.

9. Fahrzeug gemäß einem der vorhergehenden Ansprüche, bei welchem das Fahrzeug Kommunikationsmittel umfasst, ausgebildet, um eine Kommunikation mit einer elektronischen Einheit zu ermöglichen, welche zur Steuerung des Fahrzeugs ausgebildet ist (1).

## Revendications

1. Véhicule à entraînement automatique (1) comprenant un châssis à roues (3) et une cabine (2) portée par le châssis (3), dans lequel la cabine (2) peut être séparée du châssis (3), **caractérisé en ce que** ledit véhicule comprend des moyens de levage (11) configurés pour lever la cabine (2) dudit châssis (3).

2. Véhicule selon la revendication 1, dans lequel le châssis (3) est couplé à la cabine (2) par un couplage de forme.

3. Véhicule selon la revendication 1 ou 2, dans lequel ledit châssis se déplace au moyen de roues motorisées.

4. Véhicule selon la revendication 3, dans lequel lesdites roues sont motorisées par voie électrique.

5. Véhicule selon l'une des revendications précédentes, dans lequel ledit véhicule comprend une unité électronique configurée pour entraîner automatiquement ledit châssis.

6. Véhicule selon l'une des revendications précédentes, dans lequel ledit véhicule comprend des moyens de raccordement (7) configurés pour coupler sélectivement la cabine (2) au châssis (3).

7. Véhicule selon la revendication 6, dans lequel lesdits moyens de raccordement (7) comprennent des éléments (8) portés soit par la cabine (2) soit par le châssis (3), configurés pour être insérés dans des trous (9) respectifs pratiqués dans la cabine (2) ou dans le châssis (3), selon celui qui ne porte pas les éléments.

8. Véhicule selon l'une quelconque des revendications précédentes, dans lequel lesdits moyens de levage (11) sont des bras mécaniques (12).

9. Véhicule selon l'une des revendications précédentes, dans lequel ledit véhicule comprend des moyens de communication configurés pour permettre la communication avec une unité électronique configurée pour commander ledit véhicule (1).
